# FASCICULE DE BREVET EUROPEEN

(11) **EP 1 087 168 B1**
(45) Date de publication et mention de la délivrance du brevet: **09.06.2004**
(21) Numéro de dépôt: 00402566.4
(22) Date de dépôt: 18.09.2000
(51) Int. Cl.: F16L 37/084

(54) **Dispositif de connexion d'une extrémité de conduite à un organe**
Vorrichtung zum Verbinden von einem Leitungsende mit einem Anschlussteil
A device for connecting a pipe to a conduit member

(30) Priorité: 27.09.1999 FR 9911989
(43) Date de publication de la demande: 28.03.2001
(73) Titulaire: LEGRIS S.A., F-35000 Rennes (FR)
(72) Inventeur: Le Quere, Philippe, 35830 Betton (FR)
(74) Mandataire: Robert, Jean-Pierre

(56) Documents cités:
- EP-A- 0 060 310
- DE-A- 3 508 296
- DE-U- 9 204 939
- GB-A- 2 177 174

## Description

La présente invention concerne un dispositif de connexion d'une extrémité de conduite à un organe d'un circuit conducteur de fluide sous pression, telle qu'une autre conduite, un réservoir ou une pompe.

Un tel dispositif de connexion comporte généralement un embout tubulaire attelé à l'organe et pourvu d'un épaulement interne annulaire de butée de l'extrémité de conduite et de moyens pour assujettir de manière étanche cette extrémité dans l'embout tubulaire. Ces moyens comprennent une rondelle à griffes montée dans l'embout tubulaire et un joint torique reçu dans l'embout tubulaire entre l'épaulement et la rondelle à griffes.

Lors du raccordement de l'extrémité de conduite, l'extrémité de conduite est emmanchée dans l'embout tubulaire jusqu'à venir en butée contre l'épaulement annulaire. Les griffes sont alors en appui sur la surface externe de l'extrémité de conduite et le joint torique est en contact étroit avec la surface externe de l'extrémité de conduite, assurant ainsi l'étanchéité du raccordement. Lors de la mise sous pression du circuit dans lequel le dispositif de connexion est installé, en raison notamment du jeu d'assemblage des composants du dispositif de connexion, l'extrémité de conduite recule légèrement sous l'effet de la pression avant que les griffes mordant dans la surface externe de l'extrémité de conduite ne s'arc-boutent. La pénétration des griffes dans la surface externe de la conduite engendre également un recul de la conduite. Il existe alors un espace d'une part entre l'extrémité de la conduite et l'épaulement annulaire et d'autre part, un jeu entre la conduite et l'embout.

Pendant la circulation d'un liquide dans la zone de raccordement, une partie du liquide risque de s'introduire dans cet espace et la partie de ce jeu limitée par le joint et d'y stagner constamment. Cet espace constitue donc une zone de rétention du liquide. Dans le cas de liquides alimentaires, le liquide retenu dans les zones de rétention s'altère et pollue le liquide circulant ultérieurement dans la zone de raccordement. En outre, ces zones de rétention ont des dimensions relativement faibles qui les rendent particulièrement difficiles à nettoyer.

Il existe donc un besoin non résolu de manière commode à ce jour d'un dispositif de connexion assurant l'étanchéité du raccordement en limitant, voire en supprimant les zones de rétention de liquide.

A cet effet, on prévoit, selon l'invention, un dispositif de connexion d'une extrémité de conduite à un organe, comprenant un embout tubulaire ayant une première extrémité attelée à l'organe et une deuxième extrémité par laquelle l'extrémité de conduite est destinée à être enfoncée dans l'embout, l'embout étant pourvu intérieurement d'une butée à l'enfoncement de l'extrémité de conduite et de moyens pour assujettir de manière étanche l'extrémité de conduite dans l'embout, ces moyens comportant un élément d'étanchéité et des moyens de retenue de l'extrémité de conduite dans l'embout, le dispositif de connexion comprenant un manchon, élastiquement déformable au moins selon une direction axiale, qui comporte des moyens de fixation axiale dans l'embout coaxialement à celui-ci et, du côté de la première extrémité de l'embout, une extrémité pourvue d'un épaulement interne annulaire de butée d'une face terminale de l'extrémité de conduite pour former la butée à l'enfoncement de l'extrémité de conduite.

Ainsi, la face terminale de l'extrémité de conduite en position connectée est en appui contre l'épaulement interne annulaire du manchon provoquant un allongement élastique du manchon qui maintient en contact étroit l'épaulement interne annulaire avec la face terminale de l'extrémité de conduite. L'épaulement interne annulaire du manchon forme de la sorte une butée élastique à l'enfoncement de l'extrémité de conduite dans l'embout qui permet d'une part de s'affranchir de l'épaulement interne solidaire de l'embout des dispositifs de connexion de l'art antérieur, ce qui simplifie la structure du dispositif de connexion et en facilite le nettoyage, et compense d'autre part le recul de l'extrémité de conduite lors de la mise sous pression du circuit par la détente élastique du manchon, ce qui limite le risque de formation de zones de rétention.

Selon un mode de réalisation particulier, le manchon est agencé pour former l'élément d'étanchéité et comprend de préférence une surface interne cylindrique adjacente à l'épaulement interne destinée à être appliquée sur une surface externe de l'extrémité de conduite, la surface interne cylindrique ayant un diamètre légèrement inférieur au diamètre extérieur de l'extrémité de conduite et / ou le manchon comprend à proximité de la surface interne cylindrique une surface externe tronconique se rétrécissant vers la première extrémité de l'embout pour coopérer avec une surface interne de l'embout de forme correspondante et former un moyen de rétrécissement radial de la surface interne cylindrique du manchon.

Le manchon assure alors une double fonction de butée élastique et d'élément d'étanchéité. Le dispositif de connexion a ainsi une structure simple comportant un nombre de pièces relativement faible.

D'autres avantages de l'invention apparaîtront plus clairement à la lumière de la description qui suit des modes de réalisation particulier de l'invention.

Il sera fait référence aux dessins annexés, parmi lesquels :
- la figure 1 est une vue en coupe longitudinale d'un dispositif de connexion conforme à l'invention,
- la figure 2 est une vue en coupe longitudinale du manchon formant butée élastique,
- la figure 3 est une vue analogue à la figure 1 d'un dispositif de connexion selon une variante de réalisation,
- la figure 4 est une vue analogue à la figure 2 du manchon selon cette variante.

En référence aux figures, le dispositif de connexion selon l'invention, décrit ici, est destiné au raccordement de deux extrémités de conduite C l'une à l'autre dans un circuit de transport d'un liquide. Le dispositif de connexion peut également être agencé pour permettre le raccordement d'une extrémité de conduite à un organe émetteur ou récepteur de fluide tel qu'une pompe, un réservoir ou autre.

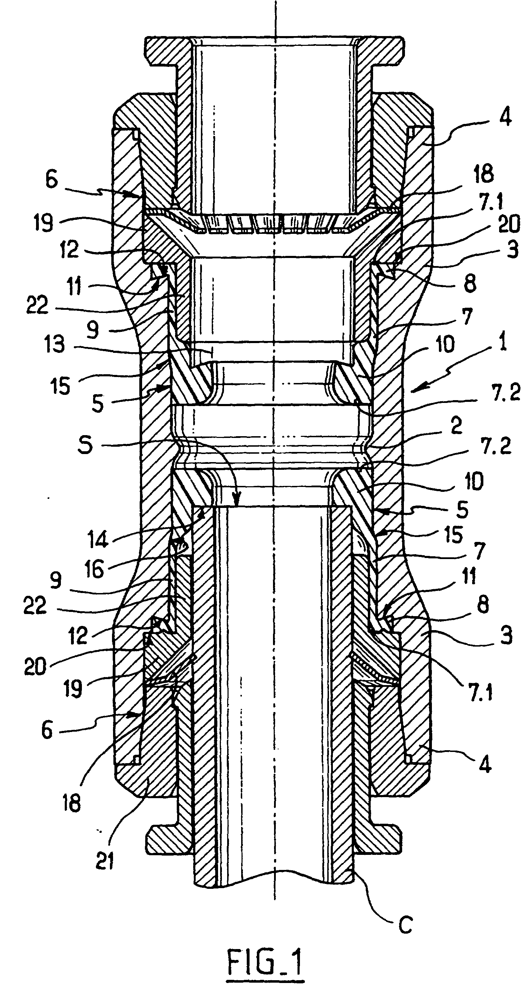

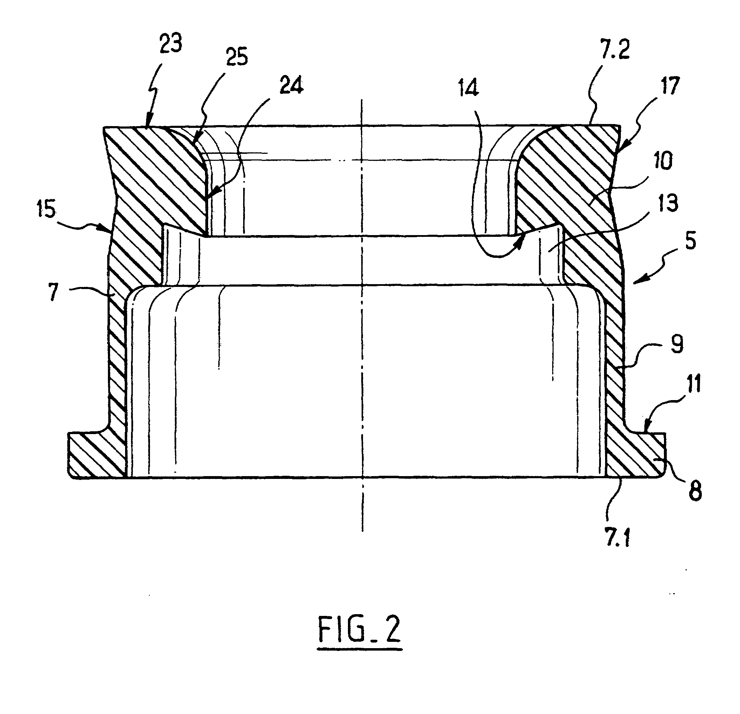

En référence plus particulièrement aux figures 1 et 2, le dispositif de connexion comprend un embout tubulaire généralement désigné en 1 en saillie à l'intérieur duquel s'étend un renflement annulaire 2 médian ayant un diamètre interne légèrement inférieur au diamètre interne de l'embout 1 et divisant l'embout 1 en deux sections 3 identiques de raccordement à une extrémité de conduite C. Chaque section de raccordement 3 comprend une extrémité libre 4 opposée à l'autre section de raccordement 3 et par laquelle l'extrémité de conduite C est destinée à être introduite dans la section de raccordement 3.

Chaque section de raccordement 3 est pourvue intérieurement d'une butée élastique 5 à l'enfoncement de l'extrémité de conduite C dans la section de raccordement 3 concernée et de moyens généralement désignés en 6 de retenue de l'extrémité de conduite C en position enfoncée. Les moyens de retenue 6 s'étendent du côté de l'extrémité libre 4 de la section de raccordement 3 concernée et la butée élastique 5 est disposée entre les moyens de retenue 6 et le renflement 2 de l'embout 1.

La butée élastique 5 comprend un manchon 7 s'étendant à l'intérieur de l'embout 1 coaxialement à celui-ci. Le manchon 7 est en un matériau élastiquement déformable tel qu'un élastomère.

Le manchon 7 comprend, à une extrémité 7.1 disposée du côté des moyens de retenue 6, une bague 8 d'ancrage du manchon 7 dans l'embout 1 reliée par une paroi tubulaire 9 déformable élastiquement en direction axiale à un corps 10 tubulaire formant une extrémité 7.2 du manchon 7 disposée du côté du renflement 2. La bague 8 et la paroi tubulaire 9 ont un diamètre interne identique supérieur au diamètre externe de l'extrémité de conduite C.

La bague d'ancrage 8 comporte un épaulement externe 11 annulaire en butée, selon le sens d'introduction de l'extrémité de la conduite C dans l'embout 1, contre une surface annulaire 12 correspondante de la section de raccordement 3 concernée de l'embout 1. La bague 8 forme un moyen de fixation axiale du manchon 7 dans l'embout 1.

Le corps 10 comporte un chambrage 13 de diamètre légèrement inférieur au diamètre externe de l'extrémité de conduite C et un épaulement interne 14 annulaire de butée d'une face terminale S de l'extrémité de conduite C s'étendant en saillie dans le chambrage 13 d'un côté de celui-ci opposé à la paroi tubulaire 9.

Le corps 10 comporte une surface externe sensiblement tronconique 15 disposée au voisinage du chambrage 13 pour se rétrécir en direction de l'extrémité 7.2 et s'étendre en regard d'une surface interne 16 de l'embout 1 de forme correspondante. La surface externe tronconique 15 est raccordée par sa petite section à la petite section d'une surface externe sensiblement tronconique 17 de l'extrémité 7.2 ayant au repos (voir figure 2) une grande section de diamètre supérieur au diamètre interne de la section de raccordement 3 à proximité du renflement 2. Ainsi, lorsque le manchon 7 est mis en place dans la section de raccordement 3, l'extrémité 7.2 est légèrement serrée dans la section de raccordement 3 au moins au niveau de la grande section de la surface tronconique 17.

Les moyens de retenue 6 comprennent une rondelle à griffes 18 serrée entre une douille de butée 19 en appui contre un épaulement 20 de la section de raccordement 3 concernée et contre l'extrémité 7.1 du manchon 7 et un insert de blocage 21 encastré de façon classique dans l'extrémité libre 4 de la section de raccordement 3 pour appliquer la rondelle à griffes 18 contre la douille de butée 19 et maintenir celle-ci dans la section de raccordement 3. Les griffes de la rondelle 18 sont élastiquement déformables entre une position de retenue dans laquelle les griffes sont en saillie à l'intérieur de la section de raccordement 3 pour être en prise avec l'extrémité de conduite C lorsque celle-ci est introduite dans la section de raccordement 3 et une position de dégagement dans laquelle les griffes sont escamotées par rapport à leur position en saillie et délimitent une section de passage légèrement supérieure à la section de la conduite. Les griffes sont amenées dans leur position en saillie par l'intermédiaire d'un poussoir 26 reçu à coulissement dans l'insert de blocage.

La douille de butée 19 comprend une portion tubulaire de guidage 22 de l'extrémité de conduite C. Cette portion tubulaire de guidage 22 a un diamètre interne légèrement supérieur au diamètre externe de l'extrémité de conduite C et un diamètre externe sensiblement égal au diamètre interne de la bague 8 et de la paroi tubulaire 9 et est engagée dans celle-ci. On comprend que la bague 8 est pincée entre la douille de butée 19 et la surface annulaire 12 de la section de raccordement 3 et que la portion tubulaire 22 empêche un échappement radial de l'épaulement externe 11 par rapport à la surface annulaire 12. Pour limiter encore le risque d'un échappement radial, la surface annulaire 12 présente un redan sensiblement annulaire (réalisé dans la masse ou rapporté) qui vient pénétrer dans l'épaulement externe 11 en comprimant la bague d'ancrage 8 ou qui est logé dans une gorge plane ménagée de façon correspondante dans l'épaulement externe 11.

Lors de la connexion d'une extrémité de conduite C dans une section de raccordement 3, l'extrémité de conduite C est emmanchée dans la section de raccordement 3. L'extrémité de conduite C est alors reçue dans le chambrage 13 et sa surface terminale S est appliquée contre l'épaulement 14 provoquant l'allongement élastique principalement de la paroi tubulaire 9 du manchon 7 (dont la faible épaisseur la rend plus facilement déformable que les autres parties du manchon d'épaisseur plus importante, cette déformabilité plus importante peut également être obtenue par traitement local du matériau ou par l'utilisation d'un matériau plus souple) jusqu'à ce que l'extrémité 7.2 du manchon arrive à proximité du renflement 2 qui forme une butée à l'allongement du manchon 7. Le renflement 2 se raccorde ici à la surface interne de chaque section de raccordement 3 de manière progressive par une surface sensiblement tronconique qui provoque une déformation radiale de l'extrémité 7.2 tendant à comprimer le corps tubulaire 10 sur l'extrémité de conduite C. Par réaction, le frottement de l'extrémité 7.2 dans l'embout augmente, accroissant ainsi l'effort résistant à l'introduction de l'extrémité de conduite dans l'embout. En outre, du fait notamment de ce raccordement progressif, la zone adjacente au bourrelet (notamment entre l'extrémité 7.2 et le bourrelet) est ainsi facilement accessible, ce qui facilite le nettoyage, et limite les volumes morts risquant de former des zones de rétention. Le renflement 2 pourrait cependant avoir une autre forme.

La paroi tubulaire 9 axialement déformée tend à revenir dans un état de repos lorsque l'effort d'emmanchement est relâché et/ou le circuit est mis sous pression. Les griffes de la rondelle à griffes 17 s'arc-boutent alors et pénètrent dans la surface externe de l'extrémité de conduite C.

En raison de son élasticité, le manchon 7 exerce un effort sur l'extrémité de conduite C, maintenant ainsi un contact étroit entre l'épaulement interne 14 du manchon 7 et la surface terminale S de l'extrémité de conduite C. Pour améliorer ce contact, l'épaulement interne 14 peut avoir une forme tronconique convexe (c'est-à-dire dont le sommet est dirigé vers l'extrémité 7.1, voir figure 2) qui est légèrement comprimée lors de l'introduction de l'extrémité de conduite, ou présenter une saillie annulaire. Par ailleurs, lors de l'allongement du manchon 7, les surfaces tronconiques 15 et 16 glissent l'une sur l'autre et constitue un moyen de rétrécissement radial du chambrage 13 maintenant en contact étroit la surface de celui-ci avec la surface externe de l'extrémité de conduite C. En outre, par réaction, l'effort exercé par l'extrémité de conduite C sur la paroi du chambrage 13 et l'épaulement 14 tend à appliquer la surface externe du corps 10, et notamment la surface tronconique 17, contre la surface interne de la section de raccordement 3. De plus, lorsque le circuit est mis sous pression, le liquide transporté exerce une pression sur l'extrémité 7.2 du manchon 7 appliquant l'épaulement 14 contre la surface terminale S de l'extrémité de conduite C et la surface externe de l'extrémité 7.2 contre la surface interne de la section de raccordement 3. Pour améliorer l'action du liquide sur l'extrémité 7.2, la surface terminale 23 de l'extrémité 7.2 se raccorde à la surface interne 24 de celle-ci par une portion curviligne 25 (comme représenté aux figures) ou tronconique.

Ces mises en contact étroit assurent l'étanchéité du raccordement.

Du fait de l'élasticité du manchon 7, les contacts ainsi engendrés entre l'extrémité de conduite, le manchon et la section de raccordement sont maintenus lorsque des efforts autres que ceux dus à la pression du liquide sont exercés sur la conduite, comme des efforts de flexion provoquant une ovalisation de celle-ci. L'incidence de tels efforts au niveau de l'élément d'étanchéité est en outre limitée par la partie tubulaire 22 de la douille de butée 19 assurant le guidage de l'extrémité de conduite C.

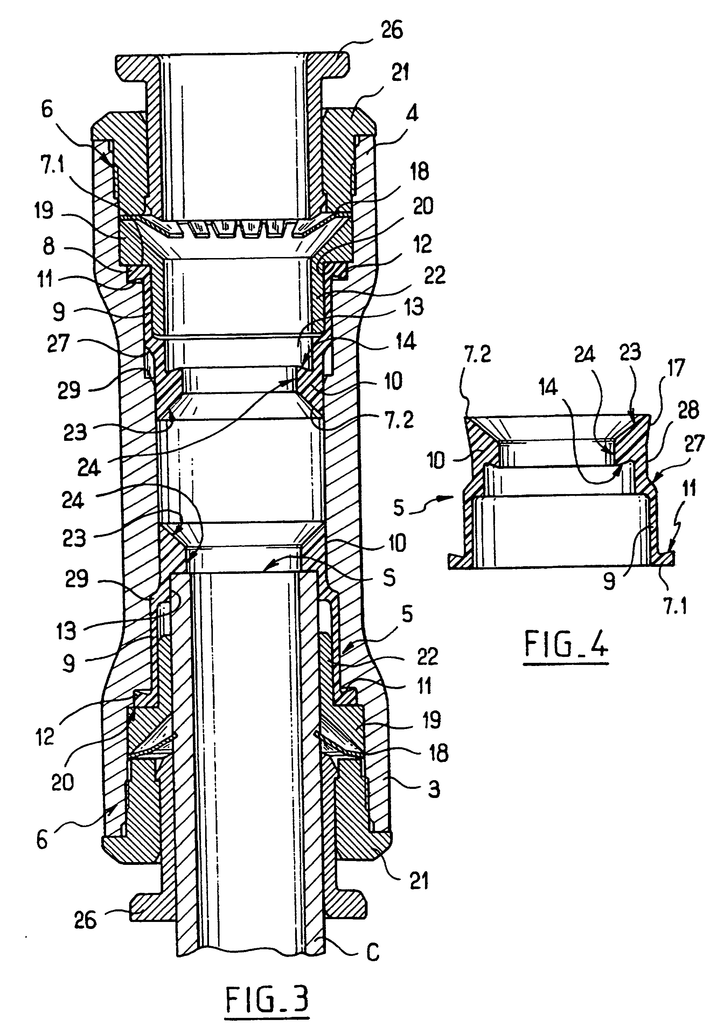

Les éléments identiques ou analogues à ceux précédemment décrits porteront des références numériques identiques dans la description qui suit de la variante de réalisation des figures 3 et 4.

Comme précédemment, le dispositif de connexion comprend un embout 1 ayant deux sections de raccordement 3 et 4 dans chacune desquelles sont disposés coaxialement un manchon 7 formant une butée élastique 5, une rondelle à griffes 18 serrée entre une douille de butée 19 et un insert de blocage 21, et un poussoir reçu à coulissement dans l'insert de blocage 21.

Dans cette variante, le manchon 7 comprend un décrochement externe 27 de forme sensiblement tronconique ayant une grande section raccordée à la paroi tubulaire 9 et une petite section raccordée à la petite section de la surface externe tronconique 17 soit directement soit, comme ici, par une surface sensiblement cylindrique 28. Le décrochement externe 27 est destiné à coopérer avec un décrochement interne 29 correspondant de la section de raccordement 3 de manière que celui-ci forme une butée à l'allongement de la paroi 9. Les décrochements interne et externe 27 et 29 peuvent avoir toute forme leur permettant d'exercer cette fonction et notamment une forme annulaire radiale ou une forme en pavillon. Avantageusement, le décrochement externe 27 et le décrochement interne 29 sont agencés pour assurer une fonction de rétrécissement du chambrage 13 autour de l'extrémité de conduite C lors de l'introduction de celle-ci dans l'embout.

La surface terminale 23 est de forme sensiblement tronconique concave (c'est-à-dire avec un sommet orienté vers l'extrémité 7.1). Ainsi, il est obtenu un raccordement progressif de la surface interne 24 à la surface interne de l'embout 1.

On notera que la portion de la surface interne de l'embout 1 s'étendant entre les extrémités 7.2 est cylindrique et sensiblement lisse.

Ainsi, lorsque des conduites sont raccordées au dispositif de connexion, il n'y a pas de décrochement de surface abrupte ou de renfoncement étroit dans lesquels le fluide transporté pourrait stagner. Ceci élimine sensiblement le risque de contamination du fluide transporté par du fluide altéré stagnant, et facilite le nettoyage.

Le manchon 7 peut comprendre un corps tubulaire 10 pourvu extérieurement d'un épaulement en appui contre une surface radiale correspondante de l'embout pour assurer la fixation axiale du manchon dans celui-ci.

## Revendications

1. Dispositif de connexion d'une extrémité de conduite à un organe, comprenant un embout tubulaire (1) ayant une première extrémité attelée à l'organe et une deuxième extrémité (4) par laquelle l'extrémité de conduite (C) est destinée à être enfoncée dans l'embout, l'embout étant pourvu intérieurement d'une butée à l'enfoncement de l'extrémité de conduite et de moyens pour assujettir de manière étanche l'extrémité de conduite dans l'embout, ces moyens comportant un élément d'étanchéité et des moyens (6) de retenue de l'extrémité de conduite dans l'embout, **caractérisé en ce que** le dispositif de connexion comprend un manchon (7), élastiquement déformable au moins selon une direction axiale, qui comporte des moyens de sa fixation axiale dans l'embout et, du côté de la première extrémité de l'embout, une extrémité (7.2) pourvue d'un épaulement interne annulaire (14) de butée d'une face terminale (S) de l'extrémité de conduite (C) pour former la butée à l'enfoncement de l'extrémité de conduite.

2. Dispositif de connexion selon la revendication 1, **caractérisé en ce que** le manchon (7) est agencé pour former l'élément d'étanchéité.

3. Dispositif de connexion selon la revendication 2, **caractérisé en ce que** le manchon (7) comprend une surface interne cylindrique (13) adjacente à l'épaulement interne (14) destinée à être appliquée sur une surface externe de l'extrémité de conduite (C).

4. Dispositif de connexion selon la revendication 3, **caractérisé en ce que** la surface interne cylindrique (13) a un diamètre légèrement inférieur au diamètre extérieur de l'extrémité de conduite.

5. Dispositif de connexion selon la revendication 3 ou la revendication 4, **caractérisé en ce que** le manchon (7) comprend à proximité de la surface interne cylindrique (13) une surface externe tronconique (15) se rétrécissant vers la première extrémité de l'embout pour coopérer avec une surface interne de forme correspondante (16) de l'embout (1) et former un moyen de rétrécissement radial de la surface interne cylindrique (13) du manchon.

6. Dispositif de connexion selon l'une des revendications précédentes, **caractérisé en ce que** le manchon (7) comprend du côté de la deuxième extrémité (4) de l'embout (1) une extrémité (7.1) pourvue d'un épaulement externe(11) de butée axiale du manchon dans l'embout (1).

7. Dispositif de connexion selon l'une quelconque des revendications précédentes, **caractérisé en ce que** l'embout (1) comprend un renflement interne annulaire (2) de butée à l'allongement axial du manchon (7) en coopérant avec l'extrémité (7.2) du manchon (7) pourvue de l'épaulement interne annulaire (14).

8. Dispositif de connexion selon l'une quelconque des revendications 1 à 6, **caractérisé en ce que** l'embout comprend un décrochement interne (29) destiné à former une butée à l'allongement du manchon en coopérant avec un décrochement externe (27) correspondant du manchon (7).

9. Dispositif de connexion selon l'une quelconque des revendications précédentes, **caractérisé en ce que** les moyens de retenue comprennent une rondelle à griffes (18) serrées entre une douille de butée (19) adjacente au manchon (7) et un insert de blocage (21) appliquant la rondelle contre la douille de butée, et **en ce que** la douille de butée comprend une portion tubulaire de guidage (22) ayant un diamètre interne sensiblement égal à un diamètre externe de l'extrémité de conduite et s'étendant dans l'extrémité (7.1) du manchon (7) opposé à l'épaulement interne annulaire (14).

10. Dispositif de connexion selon la revendication 9 prise en dépendance de la revendication 6,
**caractérisé en ce que** la portion tubulaire de guidage (22) a un diamètre extérieur sensiblement égal au diamètre intérieur de ladite extrémité (7.1) du manchon (7).

## Patentansprüche

1. Vorrichtung zum Verbinden eines Leitungsendes mit einem Element, umfassend eine rohrförmigen Muffe (1), deren erstes Ende mit dem Element verbunden ist und an deren zweitem Ende (4) das Leitungsende (C) in die Muffe eingedrückt werden soll, wobei die Muffe im Innern einen Anschlag gegenüber dem Eindrücken des Leitungsendes und Mittel zum dichten Festlegen des Leitungsendes in der Muffe aufweist, die ein Dichtungselement und Mittel (6) zum Halten des Leitungsendes in der Muffe umfassen, **dadurch gekennzeichnet, dass** die Verbindungsvorrichtung eine Hülse (7) umfasst, die zumindest in Achsenrichtung elastisch verformbar ist und Mittel zu ihrer axialen Festlegung in der Muffe und auf der Seite des ersten Endes der Muffe ein Ende (7.2) umfaßt, das eine ringförmige innere Schulter (14) hat, die gegenüber einer Endfläche (S) des Leitungsendes (C) einen Anschlag darstellt, der den Anschlag gegenüber dem Eindrücken des Leitungsendes bildet.

2. Verbindungsvorrichtung nach Anspruch 1, **dadurch gekennzeichnet, dass** die Hülse (7) derart angeordnet ist, dass sie das Dichtungselement bildet.

3. Verbindungsvorrichtung nach Anspruch 2, **dadurch gekennzeichnet, dass** die Hülse (7) eine zylindrische Innenfläche (13) hat, die an die innere Schulter (14) grenzt und dazu vorgesehen ist, an einer Außenfläche des Leitungsendes (C) anzuliegen.

4. Verbindungsvorrichtung nach Anspruch 3, **dadurch gekennzeichnet, dass** der Durchmesser der zylindrischen Innenfläche (13) ein wenig kleiner ist als der Außendurchmesser des Leitungsendes.

5. Verbindungsvorrichtung nach Anspruch 3 oder 4, **dadurch gekennzeichnet, dass** die Hülse (7) in der Nähe der zylindrischen Innenfläche (13) eine kegelstumpfförmige Außenfläche (15) umfasst, die sich in Richtung des ersten Endes der Muffe verengt, um mit einer eine entsprechende Form aufweisenden Innenfläche (16) der Muffe zusammenzuwirken und ein Mittel zur radialen Verengung der zylindrischen Innenfläche (13) der Hülse zu bilden.

6. Verbindungsvorrichtung nach einem der vorhergehenden Ansprüche, **dadurch gekennzeichnet, dass** die Hülse (7) auf der Seite des zweiten Endes (4) der Muffe (1) ein Ende (7.1) umfasst, das eine äußere Schulter (11) aufweist, die in Achsenrichtung einen Anschlag der Hülse in der Muffe (1) bildet.

7. Verbindungsvorrichtung nach einem der vorhergehenden Ansprüche, **dadurch gekennzeichnet, dass** die Muffe (1) einen ringförmigen Innenwulst (2) umfaßt, der gegenüber der axialen Ausdehnung der Hülse (7) einen Anschlag bildet, indem er mit dem mit der ringförmigen inneren Schulter (14) versehenen Ende (7.2) der Hülse (7) zusammenwirkt.

8. Verbindungsvorrichtung nach einem der Ansprüche 1 bis 6, **dadurch gekennzeichnet, dass** die Muffe einen inneren Absatz (29) hat, der dazu vorgesehen ist, gegenüber der Ausdehung der Hülse einen Anschlag zu bilden, indem er mit einem entsprechenden äußeren Absatz (27) der Hülse (7) zusammenwirkt.

9. Verbindungsvorrichtung nach einem der vorhergehenden Ansprüche, **dadurch gekennzeichnet, dass** die Haltemittel eine Klauenscheibe (18) umfassen, die zwischen eine an die Hülse (7) grenzende Anschlagbuchse (19) und einen Blockiereinsatz (21) gespannt ist, der die Scheibe gegen die Anschlagbuchse drückt, und dass die Anschlagbuchse einen rohrförmigen Führungsabschnitt (22) hat, dessen Innendurchmesser im wesentlichen einem Außendurchmesser des Leitungsendes entspricht und der sich in dem der ringförmigen inneren Schulter (14) entgegengesetzten Ende (7.1) der Hülse (7) erstreckt.

10. Verbindungsvorrichtung nach Anspruch 9 in Abhängigkeit von Anspruch 6, **dadurch gekennzeichnet, dass** der Außendurchmesser des rohrförmigen Führungsabschnitts (22) im wesentlichen dem Innendurchmesser des Endes (7.1) der Hülse (7) entspricht.

## Claims

1. A device for connecting a pipe end to a member, the device comprising a tubular endpiece (1) having a first end secured to the member and a second end (4) through which the pipe end (C) can be engaged in the endpiece, the endpiece being provided internally with an abutment against engagement of the pipe end and means for securing the pipe end in leakproof manner inside the endpiece, these means including a sealing element and means (6) for retaining the pipe end inside the endpiece, **characterized in that** the connection device comprises a sleeve (7) that is elastically deformable at least in an axial direction, which sleeve has means for fixing it axially in the endpiece and, towards the first end of the endpiece, an end (7.2) provided with an annular internal shoulder (14) for coming into abutment against an end face (S) of the pipe end (C) so as to form the abutment against engagement of the pipe end.

2. A connection device according to claim 1, **characterized in that** the sleeve (7) is arranged to form the sealing element.

3. A connection device according to claim 2, **characterized in that** the sleeve (7) has a cylindrical inner surface (13) adjacent to the inner shoulder (14) to be pressed against an outer surface of the pipe end (C).

4. A connection device according to claim 3, **characterized in that** the diameter of the cylindrical inner surface (13) is slightly smaller than the outside diameter of the pipe end.

5. A connection device according to claim 3 or claim 4, **characterized in that** the sleeve (7) has an outer frustoconical surface (15) in the vicinity of the cylindrical inner surface (13), the frustoconical surface tapering towards the first end of the endpiece to cooperate with an inner surface of complementary shape (16) of the endpiece (1) and form means for radially shrinking the cylindrical inner surface (13) of the sleeve.

6. A connection device according to any preceding claim, **characterized in that** the sleeve (7) has an end (7.1) adjacent to the second end (4) of the endpiece (1) and provided with an outer shoulder (11) to provide an axial abutment for the sleeve in the endpiece (1).

7. A connection device according to any preceding claim, **characterized in that** the endpiece (1) has an annular inner swelling (2) providing an abutment against axial lengthening of the sleeve (7) and co-operating with the end (7.2) of the sleeve (7) that is provided with the annular inner shoulder (14).

8. A connection device according to any one of claims 1 to 6, **characterized in that** the endpiece has an inner setback (29) to form an abutment against lengthening of the sleeve by co-operating with a corresponding outer setback (27) of the sleeve (7).

9. A connection device according to any preceding claim, **characterized in that** the retaining means comprise a claw washer (18) whose claws are clamped between an abutment bushing (19) adjacent to the sleeve (7) and a locking insert (21) pressing the washer against the abutment bushing, and **in that** the abutment bushing has a tubular guide portion (22) with an inside diameter that is substantially equal to an outside diameter of the pipe end and extending in the end (7.1) of the sleeve (7) that is remote from the annular inner shoulder (14).

10. A connection device according to claim 9 as dependent on claim 6, **characterized in that** the tubular guide portion (22) has an outside diameter substantially equal to the inside diameter of said end (7.1) of the sleeve (7).
